# EUROPEAN PATENT SPECIFICATION

(11) **EP 4 504 470 B1**
(45) Date of publication and mention of the grant of the patent: **18.03.2026**
(21) Application number: 23710843.6
(22) Date of filing: 08.03.2023
(51) Int. Cl.: B27N 3/18, B27N 5/02, B27N 3/00, B27N 3/14, B27N 3/20, B29C 33/40, B29C 43/36, D04H 1/732

(54) **A METHOD FOR FORMING A CELLULOSE PRODUCT IN A DRY-FORMING MOULD SYSTEM**
VERFAHREN ZUR HERSTELLUNG EINES ZELLULOSEPRODUKTES IN EINEM TROCKENFORMSYSTEM
PROCÉDÉ DE FORMAGE D'UN PRODUIT CELLULOSIQUE DANS UN SYSTÈME DE MOULE DE FORMAGE À SEC

(30) Priority: 08.04.2022 SE 2250450
(43) Date of publication of application: 12.02.2025
(73) Proprietor: PulPac AB, 421 31 Västra Frölunda (SE)
(72) Inventor: LARSSON, Ove, 426 74 Västra Frölunda (SE); EKWALL, Peter, 443 34 Lerum (SE)
(74) Representative: Zacco Sweden AB
(86) International application number: PCT/EP2023/055871
(87) International publication number: WO 2023/194027

(56) References cited:
- WO-A1-2021/037946
- SE-A1- 1 851 373
- US-A1- 2008 197 536
- US-A1- 2021 024 706

## Description

### TECHNICAL FIELD

The present invention relates to a method for dry-forming a cellulose product in a dry-forming mould system from an air-formed cellulose blank structure. The dry-forming mould system comprises a forming mould having a first mould part and an opposing second mould part arranged to cooperate with each other in a pressing direction upon forming of the cellulose product from the air-formed cellulose blank structure.

### BACKGROUND

Cellulose fibres are often used as raw material for producing or manufacturing products. Products formed of cellulose fibres can be used in many different situations where there is a need for having sustainable products. A wide range of products can be produced from cellulose fibres and a few examples are disposable plates and cups, cutlery, lids, bottle caps, coffee pods, hangers and packaging materials.

Forming moulds are commonly used when manufacturing cellulose products from raw materials including cellulose fibres, and traditionally the cellulose products have been produced with wet-forming techniques. A material commonly used for wet-forming cellulose fibre products is wet moulded pulp. Wet moulded pulp has the advantage of being considered as a sustainable packaging material, since it is produced from biomaterials and can be recycled after use. Consequently, wet moulded pulp has been quickly increasing in popularity for different applications. Wet moulded pulp articles are generally formed by immersing a suction forming mould into a liquid or semi liquid pulp suspension or slurry comprising cellulose fibres, and when suction is applied, a body of pulp is formed with the shape of the desired product by fibre deposition onto the forming mould. With all wet-forming techniques, there is a need for high amounts of water and then drying of the wet moulded product, where the drying is a very time and energy consuming part of the production and water is becoming a scarce resource. The demands on aesthetical, chemical and mechanical properties of cellulose products are increasing, and due to the properties of wet-formed cellulose products, the mechanical strength, flexibility, freedom in material thickness, and chemical properties are limited. It is also difficult in wet-forming processes to control the mechanical properties of the products with high precision.

One development in the field of producing cellulose products is the forming of cellulose fibres without using wet-forming techniques. Instead of forming the cellulose products from a liquid or semi liquid pulp suspension or slurry, an air-formed cellulose blank structure is used for dry-forming the cellulose product in a dry-forming mould system. The air-formed cellulose blank structure is inserted into a forming mould and during the forming of the cellulose products the cellulose blank structure is subjected to a high forming pressure and a high forming temperature. When forming the cellulose blank structure, the air-formed cellulose blank structure comprises a relatively high level of humidity. Typically, the air-formed cellulose blank structure is containing up to 45 wt% (weight percent) water when formed in the dry-forming mould system. The relatively high level of humidity is energy demanding and time consuming when forming the cellulose products, due to the amount of water that needs to be driven out from the cellulose blank structure in the forming process.

US2008197536A1 discloses a dry-formation method for forming a deep-drawn three-dimensional wood fibre structural core. The method comprises providing a preformed, substantially flat, dry-formed mat of wood fibres. The mat is pressed in a three-dimensional mould for a predetermined period of time under predetermined temperature and pressure drawing the preformed, precompressed, dry mat into a three-dimensional structure.

There is thus a need for an improved dry-forming mould system and method for manufacturing a cellulose product in a dry-forming mould system, where the forming time is shortened.

### SUMMARY

An object of the present disclosure is to provide a method for dry-forming a cellulose product in a dry-forming mould system from an air-formed cellulose blank structure, where the previously mentioned problems are avoided. This object is at least partly achieved by the features of the independent claim. The dependent claims contain further developments of the method for dry-forming a cellulose product in a dry-forming mould system.

The disclosure concerns a method for dry-forming a cellulose product in a dry-forming mould system from an air-formed cellulose blank structure. The dry-forming mould system comprises a forming mould having a first mould part and an opposing second mould part arranged to cooperate with each other in a pressing direction upon forming of the cellulose product. The method comprises the steps: providing the air-formed cellulose blank structure and arranging the cellulose blank structure in the forming mould between the first mould part and the second mould part, wherein the cellulose blank structure has a moisture content in the range of 4-15 wt%, preferably in the range of 6-10 wt%, when arranged between the first mould part and the second mould part; forming the cellulose product by pressing and heating the cellulose blank structure when arranged between the first mould part and the second mould part in a single pressing operation, wherein in the single pressing operation the cellulose blank structure is pressed with a forming pressure in the range of 1-100 MPa, preferably in the range of 8-20 MPa, and heated to a forming temperature in the range of 100-200 °C, preferably in the range of 120-170 °C.

In order to achieve a proper amount of hydrogen bonds between the fibres in the cellulose blank structure, moist, heat and pressure are parameters to consider. When the forming mould closes and are kept closed in a forming position, the temperature in the cellulose blank structure positioned in the forming mould may increase due to the pressure increase and amount of water. Hence, a forming mould temperature may be somewhat lower than a desired forming temperature in the cellulose blank structure since the temperature rises due to the forming pressure. When the forming mould is opened after a forming time duration, excess steam is released, i.a. due to a pressure release, and the excess steam cools down the forming mould. Hence, an optimum low amount of water in the cellulose blank structure is important since the amount of energy needed to reach the forming temperature in consecutive forming operations are kept at a minimum.

Advantages with these features are that a minimum amount of water is used in the process, which is an advantage in itself since water is a scarce resource. Less water further has the advantage of minimizing curing time. Here, curing time relates to a post pressing operation where water in the product is dried out in a suitable environment, for example a heated oven or the like, or as an alternative long term drying in an open atmosphere, and where suitable additives, if applicable, migrates into the cellulose structure replacing moisture not part of hydrogen bonds formed during the pressing operation that gives the product its strength.

The moisture content range has been deducted from experiments which has shown that a moisture content less than 4 wt% gives unsatisfactory tensile strength of the product after curing and that 4-15 wt% gives a satisfactory tensile strength. However, the experiments have further shown the surprising effect that more than 15 wt% does not increase the tensile strength in a significant proportion relative to the increase of moist content, i.e. water usage.

The moisture content range of 4-15 wt% has the further advantage that the single pressing operation is sufficient for producing a rigid and dimensionally stable product, i.e. that the product is formed by pressing the product only one time in the forming mould. It should be noted that a moist content above 15 wt% can also give a dimensionally stable product from a single pressing operation, but an increasing moist content increases the demand for the process parameters holding time, temperature and forming pressure and a moist content above about 45 wt% it is required more than one pressing stroke depending on form and amount of cellulose material in the forming mould. A thick cellulose blank structure with a complex 3D-form, e.g. a deep-drawn high-walled cup, is inherently less rigid and dimensionally stable and it could be enough with a moist content of about 30 wt% to require more than a single pressing operation. Furthermore, it is advantageous from a recourse, energy and process economy standpoint to keep water consumption at a minimum and at the same time optimize the process parameters holding time, temperature, and forming pressure, to a minimum.

According to the invention, in the single pressing operation the cellulose blank structure is pressed with the forming pressure, and heated to the forming temperature during a predetermined forming time duration in the range of 0,15-1 s. Thus, for a cellulose blank structure having a moisture content in the range of 4-15 wt%, preferably in the range of 6-10 wt%, and where the forming pressure is in the range of 1-100 MPa, preferably in the range of 8-20 MPa, and the forming temperature is in the range of 100-200 °C, preferably in the range of 120-170 °C, the proper amount of hydrogen bonds between the fibres in the cellulose blank structure to produce a rigid and dimensionally stable product is achieved within the predetermined forming time duration in only a single pressing operation.

According to an embodiment, the method further comprises the steps: releasing the first mould part and the second mould part from each other after the predetermined forming time duration; and removing the formed cellulose product from the forming mould within a releasing time duration from initiating the releasing of the first mould part and the second mould part from each other. The releasing time duration is dependent on release time of the product and the time it takes to introduce a new cellulose web.

According to an embodiment, the method further comprises the step: applying a predetermined maximum pressing force onto the first mould part and/or the second mould part during the predetermined forming time duration, wherein the predetermined maximum pressing force is establishing the forming pressure onto the cellulose blank structure arranged in the forming mould between the first mould part and the second mould part. The necessary pressing force depends on the size of the forming mould and is calculated dependent on a predetermined pressing force.

According to an embodiment, the method further comprises the step: holding the first mould part and the second mould part in a non-moving relationship during the predetermined forming time duration, wherein in the non-moving relationship the first mould part and the second mould part are arranged at a predetermined pressing distance from each other in the pressing direction, wherein the predetermined pressing distance is establishing the forming pressure onto the cellulose blank structure arranged in the forming mould between the first mould part and the second mould part.

According to an embodiment, the first mould part comprises a first stiff mould part section and the second mould part comprises a second stiff mould part section. The method further comprises the step: establishing a minimum gap distance in the pressing direction at the predetermined pressing distance between the first stiff mould part section and the second stiff mould part section. The minimum gap distance in the pressing direction is decided dependent on the amount of cellulose fibres in the mould such that the predetermined forming pressure is reached.

According to an embodiment, the method further comprises the step: establishing a forming cavity between the first mould part and the second mould part when the cellulose blank structure is arranged in the forming mould between the first mould part and the second mould part.

According to an embodiment, the first mould part and/or the second mould part comprises a deformation element. The method further comprises the steps: compressing the deformation element upon forming of the cellulose product by pressing the cellulose blank structure when arranged between the first mould part and the second mould part in the single pressing operation, wherein in the single pressing operation during the predetermined forming time duration the deformation element is compressed to a compressed maximum extension in the pressing direction from an initial maximum extension in the pressing direction.

According to an embodiment, the first mould part and/or the second mould part comprises a heating unit. The method further comprises the steps: heating the first mould part and/or the second mould part to a forming mould temperature in the range of 100-200 °C, preferably in the range of 120-170 °C; and heating the cellulose blank structure to the forming temperature when forming the cellulose product in the single pressing operation during the predetermined forming time duration through heat transfer from the first mould part and/or the second mould part.

### BRIEF DESCRIPTION OF DRAWINGS

The disclosure will be described in detail in the following, with reference to the attached drawings, in which
- Fig. 1a-e: show schematically, in side views, a dry-forming mould system with a forming mould according to an embodiment, and
- Fig. 2a-d: show schematically, in side views, a dry-forming mould system with a forming mould according to an alternative embodiment.

### DESCRIPTION OF EXAMPLE EMBODIMENTS

Various aspects of the disclosure will hereinafter be described in conjunction with the appended drawings to illustrate and not to limit the disclosure, wherein like designations denote like elements, and variations of the described aspects are not restricted to the specifically shown embodiments, but are applicable on other variations of the disclosure.

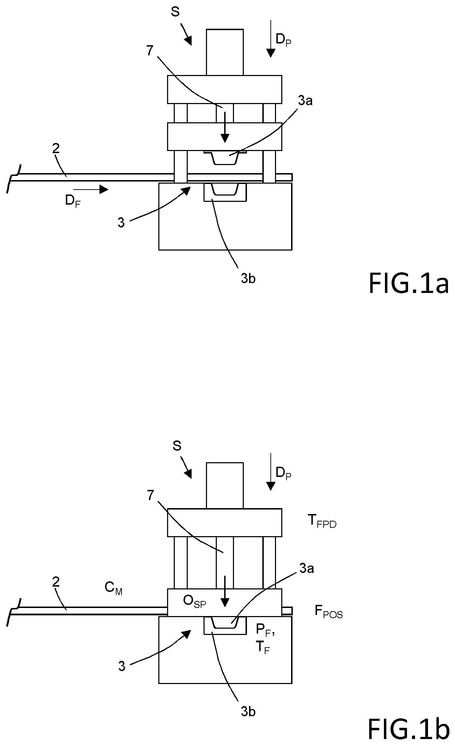

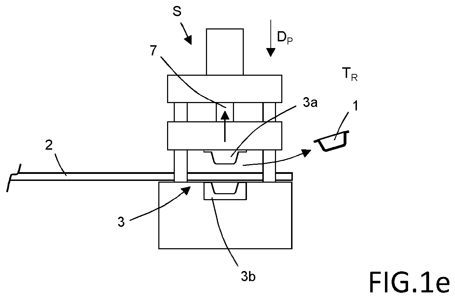

Figures 1a-b and 1e schematically show a dry-forming mould system S for dry-forming cellulose products 1 from an air-formed cellulose blank structure 2. The dry-forming mould system S comprises a forming mould 3 with a first mould part 3a and an opposing second mould part 3b configured for interacting and cooperating with each other in a pressing direction D_{P} of the dry-forming mould system S upon forming of the cellulose products 1 from the air-formed cellulose blank structure 2. The first mould part 3a and/or the second mould part 3b of the forming mould 3 are movably arranged relative to each other in the pressing direction D_{P}. The cellulose products 1 formed in the forming mould 3 suitably has a three-dimensional shape.

With an air-formed cellulose blank structure 2 is meant an essentially air-formed fibrous web structure produced from cellulose fibres. The cellulose fibres may originate from a suitable cellulose raw material, such as a pulp material. Suitable pulp materials are for example fluff pulp, paper structures, or other cellulose fibre containing structures. The cellulose fibres may also be extracted from agricultural waste materials, for example wheat straws, fruit and vegetable peels, bagasse, etc. With air-forming of the cellulose blank structure 2 is meant the formation of a cellulose blank structure in a dry forming process in which the cellulose fibres are air-formed to produce the cellulose blank structure 2. When forming the cellulose blank structure 2 in the air-forming process, the cellulose fibres are carried and formed to the fibre blank structure 2 by air as carrying medium. This is different from a normal papermaking process or a traditional wet-forming process, where water is used as carrying medium for the cellulose fibres when forming the paper or fibre structure. In the air-forming process, small amounts of water or other substances may if desired be added to the cellulose fibres in order to change the properties of the cellulose products, but air is still used as carrying medium in the forming process. The cellulose blank structure 2 may, if suitable have a dryness that is mainly corresponding to the ambient humidity in the atmosphere surrounding the air-formed cellulose blank structure 2. As an alternative, the dryness of the cellulose blank structure 2 can be controlled in order to have a suitable dryness level when forming the cellulose products 1.

The air-formed cellulose blank structure 2 may be formed of cellulose fibres in a conventional air-forming process or in a cellulose blank air-forming module. For example, the cellulose blank structure 2 may have a composition where the fibres are of the same origin or alternatively contain a mix of two or more types of cellulose fibres, depending on the desired properties of the cellulose products 1. The cellulose fibres used in the cellulose blank structure 2 are during the forming process of the cellulose products 1 strongly bonded to each other with hydrogen bonds, due to applied forming pressure and forming temperature together with adequate moist content in the cellulose blank structure 2. The cellulose fibres may be mixed with other substances or compounds to a certain amount as will be further described below. With cellulose fibres is meant any type of cellulose fibres, such as natural cellulose fibres or manufactured cellulose fibres. Today, the cellulose blank structure 2 advantageously comprises at least 95% cellulose fibres, or more specifically at least 99% cellulose fibres. However, the cellulose fibre content may be lower than 95% if a suitable additive and/or complementary substance can be added to the cellulose blank structure without jeopardizing the hydrogen bonds formed between the cellulose fibres when forming the product.

The air-formed cellulose blank structure 2 may have a single-layer or a multi-layer configuration. A cellulose blank structure 2 having a single-layer configuration is referring to a structure that is formed of one layer containing cellulose fibres. A cellulose blank structure 2 having a multi-layer configuration is referring to a structure that is formed of two or more layers comprising cellulose fibres, where the layers may have the same or different compositions or configurations.

The cellulose blank structure 2 may comprise one or more additional cellulose layers comprising cellulose fibres, where an additional cellulose layer for example is arranged as a carrying layer for one or more other layers of the cellulose blank structure 2. The one or more additional cellulose layers may act as reinforcement layers having a higher tensile strength than other layers of the cellulose blank structure 2. This is useful when one or more air-formed layers of the cellulose blank structure 2 have compositions with low tensile strength in order to avoid that the cellulose blank structure 2 will break during the forming of the cellulose products 1. The one or more additional cellulose layers with higher tensile strength act in this way as a supporting structure for other layers of the cellulose blank structure 2. The one or more additional cellulose layers may be of a different composition than the rest of the cellulose blank structure 2, such as for example a tissue layer containing cellulose fibres, an airlaid structure comprising cellulose fibres, or other suitable layer structures. It is thus not necessary that the one or more additional cellulose layers are air-formed. Other suitable additional layers may also be used such as for example silicone coated structures or bio-based films.

The one or more air-formed layers of the cellulose blank structure 2 are fluffy and airy structures, where the cellulose fibres forming the structures are arranged relatively loosely in relation to each other. The fluffy cellulose blank structures 2 are used for an efficient dry-forming of the cellulose products 1, allowing the cellulose fibres to form the cellulose products 1 in an efficient way during the dry-forming process in the dry-forming mould system S.

As described above, the cellulose products 1 are manufactured from cellulose fibres. The formed cellulose products 1 may comprise at least 95 wt% cellulose fibres, but as explained above the content depends on amount of additives and purity of fibres. For example, when manufacturing the cellulose material it may comprise different amounts of impurities such as Lignin and Hemicellulose that can be accepted as long as the adequate amount of hydrogen bonds is not jeopardized. It may be possible to have a cellulose product manufactured from cellulose fibres only, but suitable additives may be applied to the cellulose blank structure 2 to alter mechanical, hydrophobic, and/or oleophobic properties, and/or other properties of the cellulose products 1. The additives may be applied when air-forming the cellulose blank structure 2. The additives used are suitably not influencing the bonding of the cellulose fibres during the forming process to a high extent. Substances that may be added to the cellulose fibres may for example be different forms of starch, such a starch from potatoes, grain or corn in powder form, which may be added to the cellulose fibres before forming of the cellulose product in the forming mould 3. By adding starch, the strength of the final cellulose product may be increased.

As a non-limiting example, the cellulose blank structure 2 may have a material composition of 70-99.9% dry wt cellulose fibres and 0.1-30% dry wt of the one or more additives. In another embodiment, the cellulose blank structure 2 may have a material composition of 80-99.9% dry wt cellulose fibres and 0.1-20% dry wt of the one or more additives. In a further embodiment, the cellulose blank structure 2 may have a material composition of 90-99.9% dry wt cellulose fibres and 0.1-10% dry wt of the one or more additives. Depending on the amount of cellulose fibres and additives used in the cellulose blank structure 2, the cellulose products 1 can have different properties.

The one or more additives of the cellulose blank structure 2 may be, as a non-limiting example, starch compounds, rosin compounds, butanetetracarboxylic acid, gelatin compounds, latex compounds, alkyl ketene dimer (AKD), Alkenyl Succinic Anhydride (ASA), and/or flourocarbons. These additives are commonly used in the forming of cellulose products and are therefore not described in detail. Starch compounds, gelatin compounds, butanetetracarboxylic acid, and fluorocarbons may for example be used for altering the mechanical properties, such as strength or stiffness, of the cellulose product. Rosin compounds, alkyl ketene dimer (AKD), Alkenyl Succinic Anhydride (ASA), and fluorocarbons may for example be used for altering the hydrophobic properties of the cellulose products. Fluorocarbons may for example be used also for altering the oleophobic properties of the cellulose product. Other additives that may be used are wax, lignin and water glass (sodium silicate). The one or more additives of the cellulose blank structure 2 may be added to the cellulose blank structure 2 before forming the cellulose products, for example when air-forming the cellulose blank structure 2. In order to secure that the cellulose product can be recycled after use, the additives may be biodegradable or suitable for recycling.

To form the cellulose products 1 from the cellulose blank structure 2 in the dry-forming mould system S, the cellulose blank structure 2 is first provided from a suitable source. The cellulose blank structure 2 may be air-formed from cellulose fibres and arranged on rolls or in stacks as an alternative to air-forming the cellulose in-line in the manufacturing process. The rolls or stacks may thereafter be arranged in connection to the dry-forming mould system S. As an alternative, the cellulose blank structure 2 may be air-formed from cellulose fibres in a cellulose blank air-forming module arranged in connection to the dry-forming mould system S, and directly fed to the dry-forming mould system S after the air-forming operation. The cellulose blank structure 2 is fed to the forming mould 3 with suitable non-illustrated transportation means, such as forming wires, vacuum belt feeders, or conveyor belts.

The dry-forming mould system S may comprise one or more forming moulds 3, each comprising a first mould part 3a and a second mould part 3b, and the mould parts are configured for dry-forming the cellulose products 1 from the cellulose blank structure 2. The dry-forming mould system S may be arranged with only one forming mould 3 comprising one pair of first mould part 3a and opposing second mould part 3b in a single-cavity configuration, or alternatively with two or more forming moulds with pairs of first mould parts and opposing second mould parts in a multi-cavity configuration. A single-cavity configuration dry-forming mould system thus comprises only one forming mould 3 with a first mould part 3a and a cooperating second mould part 3b. A multi-cavity configuration dry-forming mould system comprises two or more forming moulds 3, each having a cooperating first mould part 3a and second mould part 3b.

In the embodiment illustrated in figures 1a-e, the dry-forming mould system S is arranged as a single-cavity configuration dry-forming mould system S comprising one forming mould 3 with a first mould part 3a and a second mould part 3b movably arranged relative to each other. In the following, the dry-forming mould system S will be described in connection to a single-cavity configuration dry-forming mould system, but the disclosure is equally applicable on a multi-cavity configuration dry-forming mould system.

The dry-forming mould system S may for example be constructed so that the first mould part 3a or the second mould part 3b is movable and arranged to move towards the other mould part during the dry-forming process, where the other mould part is stationary or non-movably arranged. In the embodiment illustrated in figures 1a-e, the first mould part 3a is movably arranged and the second mould part 3b is stationary. In an alternative non-illustrated embodiment, both the first mould part 3a and the second mould part 3b are movably arranged, where the first mould part 3a and the second mould part 3b are displaced in directions towards each other during the dry-forming process. In another alternative non-illustrated embodiment, both the first mould part 3a and the second mould part 3b are movably arranged, where the first mould part 3a and the second mould part 3b are displaced in the same direction with different speeds during the dry-forming process. The moving mould parts may be displaced with a suitable actuator, such as a hydraulic, pneumatic, or electric actuator. A combination of different actuators may also be used. The relative speed between the first mould part 3a and the second mould part 3b during the dry-forming process is suitably chosen so that the cellulose blank structure 2 is evenly distributed in a forming cavity 4 established between the mould parts during the dry-forming process.

As indicated in figure 1a, the first mould part 3a is movably arranged in relation to the second mould part 3b in the pressing direction D_{P} and the first mould part 3a is further arranged to be pressed towards the second mould part 3b in the pressing direction D_{P} during dry-forming of the cellulose products 1 for establishing a forming pressure P_{F} onto the cellulose blank structure 2.

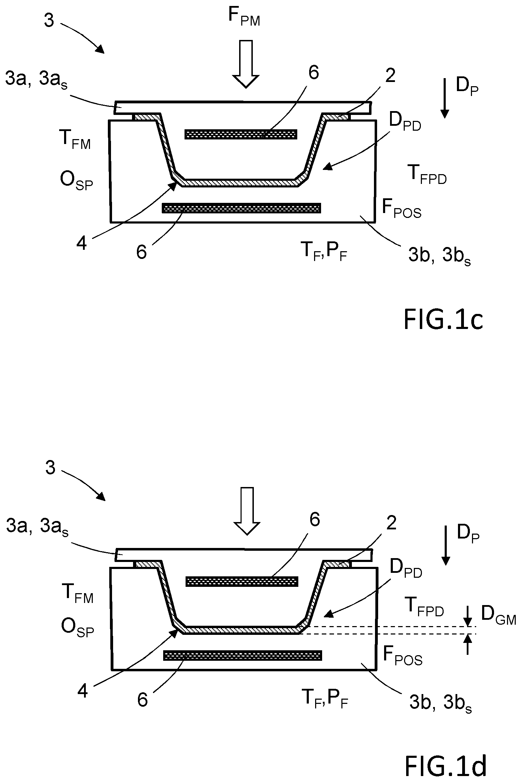

When dry-forming the cellulose products 1, the air-formed cellulose blank structure 2 is provided from a suitable source and transported in a feeding direction D_{F} to the forming mould 3. Thereafter, the air-formed cellulose blank structure 2 is arranged in the forming mould 3 between the first mould part 3a and the second mould part 3b when the mould parts are in an open state, as shown in figure 1a. Suitably, the cellulose blank structure 2 is fed intermittently to the mould parts. When the cellulose blank structure 2 has been arranged between the first mould part 3a and the second mould part 3b, the first mould part 3a is moved towards the second mould part 3b during the dry-forming process. The cellulose blank structure 2 is in this way pushed by the first mould part 3a into the second mould part 3b, and when the first mould part 3a is pushed towards the second mould part 3b with the cellulose blank structure 2 positioned between the mould parts, the forming pressure P_{F} is established onto the cellulose blank structure 2 by the pushing force applied by the first mould part 3a. The interaction between the first mould part 3a and the second mould part 3b is thus establishing the forming pressure P_{F} in the forming mould 3. The applied force is during the forming process establishing the forming pressure P_{F} onto the cellulose blank structure 2, as shown in figure 1b, which together with a forming temperature T_{F} applied onto the cellulose blank structure 2 is dry-forming the cellulose products 1. When the forming pressure P_{F} is established in the forming mould 3 onto the cellulose blank structure 2, the movement of the first mould part 3a is stopped in a product forming position F_{POS}, as shown in figures 1b-d. Figures 1c-d are enlarged views of the forming mould 3 in the product forming position F_{POS} shown in figure 1b. The forming position F_{POS} is maintained for a predetermined forming time duration T_{FPD}. In the forming position F_{POS}, the forming cavity 4 is established between the first mould part 3a and the second mould part 3b when the cellulose blank structure 2 is arranged in the forming mould 3 between the first mould part 3a and the second mould part 3b. The first mould part 3a is thereafter moved in a direction opposite the pressing direction D_{P} away from the second mould part 3b after the predetermined forming time duration T_{FPD}, as indicated in figure 1e, and the formed cellulose product 1 can be removed from the forming mould 3 with a suitable removal device. The forming mould 3 suitably comprises a cutting tool for removing the formed cellulose products 1 from residual cellulose blank structure parts. According to another example, it is also possible to cut out the products after pressing, but also possible to pre-cut the cellulose blank structure before insertion into the forming mould. After removal of the cellulose product 1 from the forming mould 3, the cellulose product forming cycle may be repeated. The dry-forming mould system S may further comprise a control unit configured for controlling the operation of the dry-forming mould system S and the mould parts.

The cellulose products 1 are dry-formed from the cellulose blank structure 2 in the dry-forming mould system S by applying the forming pressure P_{F} and a forming temperature T_{F} onto the air-formed cellulose blank structure 2 in the forming mould 3. The first mould part 3a is arranged for forming the cellulose products 1 from the cellulose blank structure 2 through interaction with the corresponding second mould part 3b. The cellulose blank structure 2 is heated to a forming temperature T_{F} in the range of 100-200 °C, preferably in the range of 120-170 °C, and pressed with a forming pressure P_{F} in the range of 1-100 MPa, preferably in the range of 8-20 MPa. During dry-forming of the cellulose products 1, the cellulose blank structure 2 is thus arranged in the forming mould 3, between the first mould part 3a and the second mould part 3b, and exerted to the forming pressure P_{F} in the range of 1-100 MPa, preferably in the range of 8-20 MPa, and the forming temperature T_{F} in the range of 100-200 °C, preferably in the range of 120-170 °C. When dry-forming the cellulose products 1, hydrogen bonds are formed between the cellulose fibres in the cellulose blank structure 2 arranged between the first mould part 3a and the second mould part 3b, due to the applied forming pressure P_{F} and forming temperature T_{F} together with adequate moist content in the cellulose blank structure 2. The temperature and pressure levels are for example measured in the cellulose blank structure 2 during the dry-forming process with suitable sensors arranged in or in connection to the cellulose fibres in the cellulose blank structure 2.

To enable an efficient and fast forming process with low energy and water consumption, the cellulose blank structure 2 has for all embodiments a moisture content C_{M} in the range of 4-15 wt%, preferably in the range of 6-10 wt%, when arranged between the first mould part 3a and the second mould part 3b. Thereafter, the cellulose product 1 is formed by pressing and heating the cellulose blank structure 2 when arranged between the first mould part 3a and the second mould part 3b in a single pressing operation O_{SP}. Tests have shown that a uniquely fast and efficient single pressing operation O_{SP} is enabled by the low moisture content C_{M} in the range of 4-15 wt%, preferably in the range of 6-10 wt%, and results in a high-speed forming operation when producing the cellulose products 1 from the cellulose blank structure 2. In the single pressing operation O_{SP}, the cellulose blank structure 2 is pressed with the forming pressure P_{F} in the range of 1-100 MPa, preferably in the range of 8-20 MPa, and heated to the forming temperature T_{F} in the range of 100-200 °C, preferably in the range of 120-170 °C, during a predetermined forming time duration T_{FPD} in the range of 0,15-1 s. The forming pressure P_{F} and the forming temperature T_{F} is thus applied onto the air-formed cellulose blank structure 2 during the predetermined forming time duration T_{FPD} in the single pressing operation O_{SP}. With a single pressing operation O_{SP} is meant that the cellulose product 1 is formed from the cellulose blank structure 2 in one single pressing step in the dry-forming mould system S. In the single pressing operation O_{SP}, the first mould part 3a and the second mould part 3b are interacting with each other for establishing the forming pressure P_{F} and the forming temperature T_{F} during a single operational engagement step. Thus, in the single pressing operation, the forming pressure P_{F} and the forming temperature T_{F} are not applied to the cellulose blank structure 2 in two or more repeated or subsequent pressing steps.

When testing the water content, the moisture content C_{M} of the cellulose blank structure can be measured with any suitable test method known in the market. For example, weighing a dry cellulose blank structure, or a cellulose blank structure where the water content is known, adding a calculated water amount dependent on water content of the weighed cellulose blank, and then weighing the wet cellulose blank structure to check that the added water actually has been absorbed in the cellulose blank structure, or by using an optical sensor, conductive sensor, capacitive sensor or the like, or pre-preparing the cellulose material to a desired water content.

The forming mould 3 suitably comprises a heating unit 6 that is establishing the forming temperature T_{F} in the cellulose blank structure 2. The heating unit 6 may have any suitable configuration, and the heating unit 6 is suitably arranged in the first mould part 3a and/or the second mould part 3b. In the embodiments illustrated in figures 1c-d, the heating unit 6 is arranged in both the first mould part 3a and the second mould part 3b. The heated mould part or heated mould parts are thus used for establishing the forming temperature T_{F}. The heating unit may be integrated in or cast into the first mould part 3a and/or the second mould part 3b, and suitable heating devices are e.g. electrical heaters, such as a resistor element, or fluid heaters. Other suitable heat sources may also be used. For an efficient product forming, the first mould part 3a and/or the second mould part 3b are heated to a forming mould temperature T_{FM} in the range of 100-200 °C, preferably in the range of 120-170 °C, and the cellulose blank structure 2 is heated to the forming temperature T_{F} when forming the cellulose product 1 in the single pressing operation O_{SP} during the predetermined forming time duration T_{FPD} through heat transfer from the first mould part 3a and/or the second mould part 3b.

After the predetermined forming time duration T_{FPD}, the first mould part 3a and the second mould part 3b are released from each other and the formed cellulose product 1 is removed from the forming mould 3, as indicated in figure 1e. The first mould part 3a and the second mould part 3b are released from each other within a releasing time duration T_{R} from initiating the releasing of the first mould part 3a and the second mould part 3b from each other for an efficient forming operation. By controlling the releasing time duration T_{R} the cellulose products can be efficiently cured after the pressing step. These specific low product moisture content ranges are possible due to the low moisture content C_{M} of the cellulose blank structure 2 and are further providing a fast product curing process.

The dry-forming mould system S further comprises a pressing unit 7 connected to the first mould part 3a and/or the second mould part 3b. The pressing unit 7 is configured for displacing the first mould part 3a and/or the second mould part 3b and for applying a pressing force onto the first mould part 3a and/or the second mould part 3b during the predetermined forming time duration T_{FPD} to establish the forming pressure P_{F} in the forming mould 3. In the embodiment shown in figures 1a-e, the pressing unit 7 is connected to the first mould part 3a for displacement of the first mould part 3a relative to the second mould part 3b. The pressing unit 7 may be of any suitable type, such as a pressing actuator arrangement, and include for example a hydraulic or pneumatic piston actuator, or an electric actuator. Alternatively, a motor with a rotating output shaft, such as an electric, hydraulic or pneumatic motor may be used for driving a mechanical actuator, or the pressing actuator arrangement may include a high-torque electric motor that is drivingly connected to a toggle-mechanism via a rotary-to-linear transmission device. The control unit is configured for controlling operation of the pressing unit 7 and the product forming process.

The pressing unit 7 may be programmed in different ways to enable a fast and efficient product forming process. In one embodiment, the pressing operation is force controlled. A predetermined maximum pressing force F_{PM} is applied onto the first mould part 3a and/or the second mould part 3b during the predetermined forming time duration T_{FPD}. The predetermined maximum pressing force F_{PM} is establishing the forming pressure P_{F} onto the cellulose blank structure 2 arranged in the forming mould 3 between the first mould part 3a and the second mould part 3b, and the first mould part 3a and/or the second mould part 3b are pushed against each other until the predetermined maximum pressing force F_{PM} is established. In the embodiment illustrated in figure 1c, the predetermined maximum pressing force F_{PM} is establishing the forming pressure P_{F} onto the cellulose blank structure 2 arranged in the forming mould 3 between the first mould part 3a and the second mould part 3b, and the first mould part 3a is pushed against the second mould part 3b until the predetermined maximum pressing force F_{PM} is established. This is enabling a fast and efficient single pressing operation O_{SP} with the low moisture content C_{M} in the range of 4-15 wt%, preferably in the range of 6-10 wt%, of the cellulose blank structure 2 when arranged between the first mould part 3a and the second mould part 3b.

In an alternative embodiment, as shown in figure 1d, the pressing operation is distance controlled, and the first mould part 3a and the second mould part 3b are held in a non-moving relationship with a predetermined pressing distance D_{PD} from each other in the pressing direction D_{P} during the predetermined forming time duration T_{FPD}. In the non-moving relationship, the first mould part 3a and the second mould part 3b are stationary and arranged at a predetermined pressing distance D_{PD} from each other in the pressing direction D_{P}. The predetermined pressing distance D_{PD} is establishing the forming pressure P_{F} onto the cellulose blank structure 2 arranged in the forming mould 3 between the first mould part 3a and the second mould part 3b. As an example, a predetermined distance in the pressing direction D_{P} between a selected first point on the first mould part 3a and a selected second point on the second mould part 3b may be used for establishing the predetermined pressing distance D_{PD}, and during the forming of the cellulose products 1 the distance between the mould parts during the single pressing operation O_{SP} is determined by the predetermined pressing distance D_{PD}.

The predetermined pressing distance D_{PD}, may be efficient to use if the forming mould 3 comprises stiff mould parts or stiff mould part sections. In the embodiment illustrated in figure 1d, the first mould part 3a comprises a first stiff mould part section 3as and the second mould part 3b comprises a second stiff mould part section 3bs. During forming of the cellulose products 1, a minimum gap distance D_{GM} is established in the pressing direction D_{P} at the predetermined pressing distance D_{PD} between the a first stiff mould part section 3aₛ and the second stiff mould part section 3bₛ. For an efficient forming in the single pressing operation O_{SP}, the minimum gap distance D_{GM} in the pressing direction D_{P} is dependent on the amount fibres introduced into the mould.

The cellulose blank structure 2 may be arranged between the mould parts in any suitable way, and as an example, the cellulose blank structure 2 may be fed with a suitable feeding device, which is transporting the cellulose blank structure 2 to the mould parts in the feeding direction D_{F} with a suitable transportation speed. The cellulose blank structure 2 is suitably fed intermittently to the forming mould 3, but could also be fed continuously if the forming mould is moving in the feeding direction of the cellulose blank structure, e.g. a rotating forming mould or a forming mould arranged on a conveyer-like arrangement. The feeding device could for example be a conveyor belt, a forming wire unit, an industrial robot, or any other suitable manufacturing equipment. The transportation speed may differ depending on the types of cellulose products 1 produced, and is chosen to match the forming speed in the dry-forming mould system S.

In the embodiment illustrated in figures 1a-e, the first mould part 3a is arranged as a positive mould part, and the second mould part 3b is arranged as a negative mould part. In alternative embodiments, the first mould part 3a may be arranged as a negative mould part, and the second mould part 3b arranged as a positive mould part.

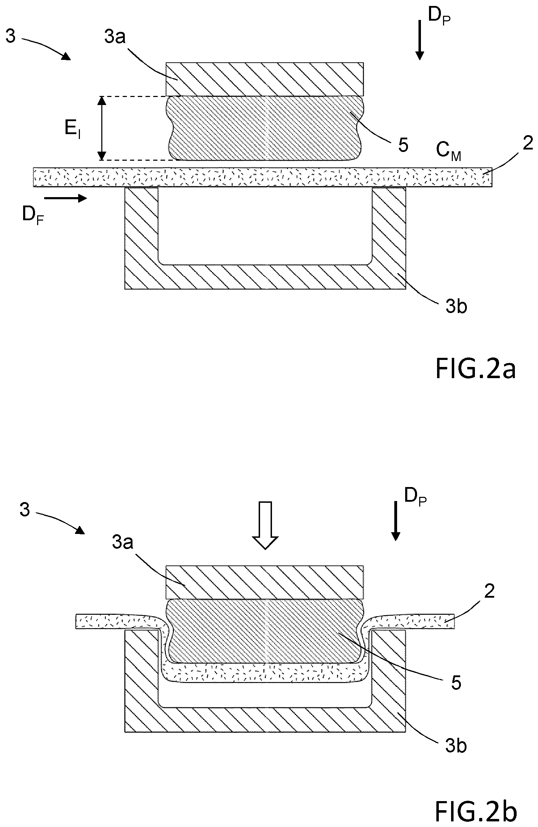

The first mould part 3a and/or the second mould part 3b may be arranged with a deformation element 5. In the alternative embodiment illustrated in figures 2a-d, the first mould part 3a is arranged with a deformation element 5. During the forming of the cellulose products 1, the deformation element 5 is deformed to exert the forming pressure P_{F} onto the cellulose blank structure 2, and through deformation of the deformation element 5, a pressure distribution is achieved, and thus a redirection of forces, even if the cellulose products are having complex three-dimensional shapes, such as for example shapes with a recessed undercut section having a negative draft angle, or if the cellulose blank structure 2 is having a varied thickness. To exert a required forming pressure P_{F} on the cellulose blank structure 2, the deformation element 5 is made of a material that can be deformed when a force or pressure is applied, and the deformation element 5 is suitably made of an elastic material capable of recovering size and shape after deformation. The deformation element 5 may further be made of a material with suitable properties that is withstanding the high forming pressure P_{F} and forming temperature T_{F} levels used when forming the cellulose products 1. The deformation element 5 may be made of a suitable structure of elastomeric material or materials, and as an example, the deformation element 5 may be made of a massive structure or an essentially massive structure of silicone rubber, polyurethane, polychloroprene, or rubber. A single deformation element structure, or a plurality of deformation element structures, may be used.

In the embodiment illustrated in figures 2a-d, the first mould part 3a with the deformation element 5 is arranged as a positive mould part, and the second mould part 3b is arranged as a negative mould part. In alternative embodiments, the first mould part 3a may be arranged as a negative mould part, and the second mould part 3b arranged as a positive mould part.

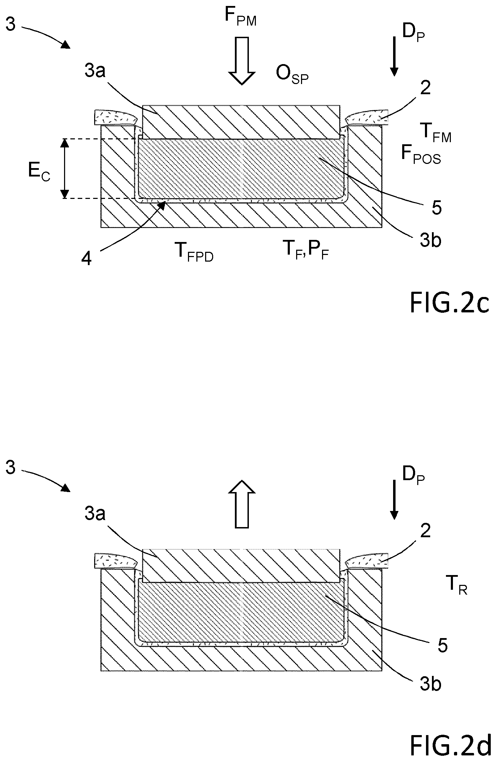

When dry-forming the cellulose products 1 with the first mould part 3a comprising the deformation element 5, the air-formed cellulose blank structure 2 is provided from a suitable source and transported in a feeding direction D_{F} to the forming mould 3, as shown in figure 2a. Thereafter, the air-formed cellulose blank structure 2 is arranged in the forming mould 3 between the first mould part 3a and the second mould part 3b when the mould parts are in an open state, as shown in figure 2a. Suitably, the cellulose blank structure 2 is fed intermittently to the mould parts. When the cellulose blank structure 2 has been arranged between the first mould part 3a and the second mould part 3b, the first mould part 3a with the deformation element 5 is moved towards the second mould part 3b during the dry-forming process, as indicated with the arrow in figure 2b. In this embodiment, a non-illustrated pressing unit is connected to the first mould part 3a for displacement of the first mould part 3a relative to the second mould part 3b. The pressing unit may have the configuration described above. The cellulose blank structure 2 is in this way pushed by the deformation element 5 into the second mould part 3b, and when the first mould part 3a is moved towards the second mould part 3b with the cellulose blank structure 2 positioned between the mould parts, the forming pressure P_{F} is established onto the cellulose blank structure 2 by the pushing force applied by the first mould part 3a comprising the deformation element 5. The interaction between the first mould part 3a with the deformation element 5 and the second mould part 3b is thus establishing the forming pressure P_{F} in the forming mould 3 in a product forming position F_{POS}, as shown in figure 2c. In this embodiment, a predetermined maximum pressing force F_{PM} is suitably establishing the forming pressure P_{F} onto the cellulose blank structure 2 arranged in the forming mould 3 between the first mould part 3a and the second mould part 3b, and the first mould part 3a is suitably pushed against the second mould part 3b until the predetermined maximum pressing force F_{PM} is established. The applied force is during the forming process establishing the forming pressure P_{F} onto the cellulose blank structure 2, which together with the forming temperature T_{F} applied onto the cellulose blank structure 2 is dry-forming the cellulose products 1. The forming temperature T_{F} is established with a suitable heating unit 6 as described above. For an efficient product forming, the first mould part 3a and/or the second mould part 3b are heated to a forming mould temperature T_{FM} in the range of 100-200 °C, preferably in the range of 120-170 °C, and the cellulose blank structure 2 is heated to the forming temperature T_{F} when forming the cellulose product 1 in the single pressing operation O_{SP} during the predetermined forming time duration T_{FPD} through heat transfer from the first mould part 3a and/or the second mould part 3b.

When the forming pressure P_{F} is established in the forming mould 3 onto the cellulose blank structure 2, the movement of the first mould part 3a is stopped in the product forming position F_{POS}, as indicated in figure 2c, and the product forming position F_{POS} is maintained for a predetermined forming time duration T_{FPD}. In the forming position F_{POS}, the forming cavity 4 is established between the first mould part 3a with the deformation element 5 and the second mould part 3b, when the cellulose blank structure 2 is arranged in the forming mould 3 between the first mould part 3a and the second mould part 3b. The first mould part 3a with the deformation element 5 is thereafter moved in a direction opposite the pressing direction D_{P} away from the second mould part 3b after the predetermined forming time duration T_{FPD}, as indicated in figure 2d, and the formed cellulose product 1 can be removed from the forming mould 3 with a suitable removal device. The forming mould 3 suitably comprises a cutting tool for removing the formed cellulose products 1 from residual cellulose blank structure parts. After removal of the cellulose product 1 from the forming mould 3, the cellulose product forming cycle may be repeated. The first mould part 3a and the second mould part 3b are suitably released from each other within a releasing time duration T_{R} from initiating the releasing of the first mould part 3a and the second mould part 3b from each other for an efficient forming operation.

For an efficient forming process when using a deformation element 5, the deformation element 5 is upon forming of the cellulose product 1 compressed to a certain degree when pressing the cellulose blank structure 2 between the first mould part 3a and the second mould part 3b in the single pressing operation O_{SP}. In the single pressing operation O_{SP} during the predetermined forming time duration T_{FPD} the deformation element 5 is compressed in the pressing direction D_{P} to a compressed maximum extension E_{C} in the pressing direction D_{P}, as indicated in figure 2c, from an initial maximum extension E_{I} in the pressing direction D_{P}, as indicated in figure 2a.

It will be appreciated that the above description is merely exemplary in nature and is not intended to limit the present disclosure, its application or uses. While specific examples have been described in the specification and illustrated in the drawings, it will be understood by those of ordinary skill in the art that various changes may be made without departing from the scope of the present disclosure as defined in the claims. Furthermore, modifications may be made to adapt a particular situation or material to the teachings of the present disclosure without departing from the scope of the appended claims. Therefore, it is intended that the present disclosure not be limited to the particular examples illustrated by the drawings and described in the specification as the best mode presently contemplated for carrying out the teachings of the present disclosure, but that the scope of the present disclosure will include any embodiments falling within the appended claims. Reference signs mentioned in the claims should not be seen as limiting the extent of the matter protected by the claims, and their sole function is to make claims easier to understand.

### REFERENCE SIGNS

- 1:: Cellulose product
- 2:: Cellulose blank structure
- 3:: Forming mould
- 3a:: First mould part
- 3aₛ:: First stiff mould part section
- 3b:: Second mould part
- 3bₛ:: Second stiff mould part section
- 4:: Forming cavity
- 5:: Deformation element
- 6:: Heating unit
- 7:: Pressing unit

- C_{M}:: Moisture content
- D_{F}:: Feeding direction
- D_{GM}:: Minimum gap distance
- D_{P}:: Pressing direction
- D_{PD}.: Predetermined pressing distance
- E_{C}:: Compressed maximum extension
- E_{I}:: Initial maximum extension
- F_{PM}:: Predetermined maximum pressing force
- F_{POS}:: Product forming position
- O_{SP}:: Single pressing operation
- S:: Dry-forming mould system
- P_{F}:: Forming pressure
- T_{F}:: Forming temperature
- T_{FM}.: Forming mould temperature
- T_{FPD}.: Predetermined forming time duration
- T_{R}:: Releasing time duration

## Claims

1. A method for dry-forming a cellulose product (1) in a dry-forming mould system (S) from an air-formed cellulose blank structure (2),
wherein the dry-forming mould system (S) comprises a forming mould (3) having a first mould part (3a) and an opposing second mould part (3b) arranged to cooperate with each other in a pressing direction (D_{P}) upon forming of the cellulose product (1), wherein the method comprises the steps:
providing the air-formed cellulose blank structure (2) and arranging the cellulose blank structure (2) in the forming mould (3) between the first mould part (3a) and the second mould part (3b), wherein the cellulose blank structure (2) has a moisture content (C_{M}) in the range of 4-15 wt%, preferably in the range of 6-10 wt%, when arranged between the first mould part (3a) and the second mould part (3b);
forming the cellulose product (1) by pressing and heating the cellulose blank structure (2) when arranged between the first mould part (3a) and the second mould part (3b) in a single pressing operation (O_{SP}),
wherein in the single pressing operation (O_{SP}) the cellulose blank structure (2) is pressed with a forming pressure (P_{F}) in the range of 1-100 MPa, preferably in the range of 8-20 MPa, and heated to a forming temperature (T_{F}) in the range of 100-200 °C, preferably in the range of 120-170 °C,
wherein the single pressing operation (O_{SP}) the cellulose blank structure (2) is pressed with the forming pressure (P_{F}), and heated to the forming temperature (T_{F}) during a predetermined forming time duration (T_{FPD}) in the range of 0,15-1 s.

2. The method according to claim 1,
wherein the method further comprises the steps: releasing the first mould part (3a) and the second mould part (3b) from each other after the predetermined forming time duration (T_{FPD}); and removing the formed cellulose product (1) from the forming mould (3) within a releasing time duration (T_{R}) from initiating the releasing of the first mould part (3a) and the second mould part (3b) from each other.

3. The method according to any preceding claims,
wherein the method further comprises the step: applying a predetermined maximum pressing force (F_{PM}) onto the first mould part (3a) and/or the second mould part (3b) during the predetermined forming time duration (T_{FPD}), wherein the predetermined maximum pressing force (F_{PM}) is establishing the forming pressure (P_{F}) onto the cellulose blank structure (2) arranged in the forming mould (3) between the first mould part (3a) and the second mould part (3b).

4. The method according to any of claims 1 to 2,
wherein the method further comprises the step: holding the first mould part (3a) and the second mould part (3b) in a non-moving relationship during the predetermined forming time duration (T_{FPD}), wherein in the non-moving relationship the first mould part (3a) and the second mould part (3b) are arranged at a predetermined pressing distance (D_{PD}) from each other in the pressing direction (D_{P}), wherein the predetermined pressing distance (D_{PD}) is establishing the forming pressure (P_{F}) onto the cellulose blank structure (2) arranged in the forming mould (3) between the first mould part (3a) and the second mould part (3b).

5. The method according to claim 4,
wherein the first mould part (3a) comprises a first stiff mould part section (3aₛ) and the second mould part (3b) comprises a second stiff mould part section (3bₛ), wherein the method further comprises the step: establishing a minimum gap distance (D_{GM}) in the pressing direction (D_{P}) at the predetermined pressing distance (D_{PD}) between the first stiff mould part section (3aₛ) and the second stiff mould part section (3bₛ).

6. The method according to any preceding claim,
wherein the method further comprises the step: establishing a forming cavity (4) between the first mould part (3a) and the second mould part (3b) when the cellulose blank structure (2) is arranged in the forming mould (3) between the first mould part (3a) and the second mould part (3b).

7. The method according to any preceding claim,
wherein the first mould part (3a) and/or the second mould part (3b) comprises a deformation element (5), wherein the method further comprises the steps: compressing the deformation element (5) upon forming of the cellulose product (1) by pressing the cellulose blank structure (2) when arranged between the first mould part (3a) and the second mould part (3b) in the single pressing operation (O_{SP}), wherein in the single pressing operation (O_{SP}) during the predetermined forming time duration (T_{FPD}) the deformation element (5) is compressed to a compressed maximum extension (E_{C}) in the pressing direction (D_{P}) from an initial maximum extension (E_{I}) in the pressing direction (D_{P}).

8. The method according to any preceding claim,
wherein the first mould part (3a) and/or the second mould part (3b) comprises a heating unit (6), wherein the method further comprises the steps: heating the first mould part (3a) and/or the second mould part (3b) to a forming mould temperature (T_{FM}) in the range of 100-200 °C, preferably in the range of 120-170 °C; and heating the cellulose blank structure (2) to the forming temperature (T_{F}) when forming the cellulose product (1) in the single pressing operation (O_{SP}) during the predetermined forming time duration (T_{FPD}) through heat transfer from the first mould part (3a) and/or the second mould part (3b).

## Patentansprüche

1. Verfahren zum Trockenformen eines Zelluloseprodukts (1) in einem Formsystem (S) zur Trocknungsformung aus einer luftgeformten Zelluloserohstruktur (2),
wobei das Formsystem (S) zur Trocknungsformung eine Form (3) umfasst, die einen ersten Formteil (3a) und einen gegenüberliegenden zweiten Formteil (3b) aufweist, die so angeordnet sind, dass sie beim Formen des Zelluloseprodukts (1) in einer Pressrichtung (D_{P}) zusammenwirken, wobei das Verfahren die Schritte umfasst:
Bereitstellen der luftgeformten Zelluloserohstruktur (2) und Anordnen der Zelluloserohstruktur (2) in der Form (3) zwischen dem ersten Formteil (3a) und dem zweiten Formteil (3b), wobei die Zelluloserohstruktur (2), wenn sie zwischen dem ersten Formteil (3a) und dem zweiten Formteil (3b) angeordnet ist, einen Feuchtigkeitsgehalt (C_{M}) im Bereich von 4-15 Gew.-%, vorzugsweise im Bereich von 6-10 Gew.-%, aufweist;
Formen des Zelluloseprodukts (1) durch Pressen und Erhitzen der Zelluloserohstruktur (2), wenn diese zwischen dem ersten Formteil (3a) und dem zweiten Formteil (3b) angeordnet ist, in einem einzigen Pressvorgang (O_{SP}),
wobei die Zelluloserohstruktur (2) im einzigen Pressvorgang (O_{SP}) mit einem Formdruck (P_{F}) im Bereich von 1-100 MPa, vorzugsweise im Bereich von 8-20 MPa, gepresst und auf eine Formtemperatur (T_{F}) im Bereich von 100-200 °C, vorzugsweise im Bereich von 120-170 °C, erhitzt wird,
wobei die Zelluloserohstruktur (2) im einzigen Pressvorgang (O_{SP}) mit dem Formdruck (P_{F}) gepresst und während einer vorgegebenen Formdauer (T_{FPD}) im Bereich von 0,15-1 s auf die Formtemperatur (T_{F}) erhitzt wird.

2. Verfahren nach Anspruch 1,
wobei das Verfahren ferner die Schritte umfasst: Lösen des ersten Formteils (3a) und des zweiten Formteils (3b) voneinander nach der vorgegebenen Formdauer (T_{FPD}); und Entnehmen des geformten Zelluloseprodukts (1) aus der Form (3) innerhalb einer Lösezeitdauer (T_{R}) ab dem Beginn des Lösens des ersten Formteils (3a) und des zweiten Formteils (3b) voneinander.

3. Verfahren nach einem der vorhergehenden Ansprüche,
wobei das Verfahren ferner den Schritt umfasst: Aufbringen einer vorgegebenen maximalen Presskraft (F_{PM}) auf den ersten Formteil (3a) und/oder den zweiten Formteil (3b) während der vorgegebenen Formdauer (T_{FPD}), wobei die vorgegebene maximale Presskraft (F_{PM}) den Formdruck (P_{F}) auf die Zelluloserohstruktur (2) aufbringt, die in der Form (3) zwischen dem ersten Formteil (3a) und dem zweiten Formteil (3b) angeordnet ist.

4. Verfahren nach einem der Ansprüche 1 bis 2,
wobei das Verfahren ferner den Schritt umfasst: Halten des ersten Formteils (3a) und des zweiten Formteils (3b) in einer bewegungslosen Beziehung während der vorgegebenen Formdauer (T_{FPD}), wobei in der bewegungslosen Beziehung der erste Formteil (3a) und der zweite Formteil (3b) in der Pressrichtung (D_{P}) in einem vorgegebenen Pressabstand (D_{PD}) zueinander angeordnet sind, wobei der vorgegebene Pressabstand (D_{PD}) den Formdruck (P_{F}) auf die Zelluloserohstruktur (2) aufbringt, die in der Form (3) zwischen dem ersten Formteil (3a) und dem zweiten Formteil (3b) angeordnet ist.

5. Verfahren nach Anspruch 4,
wobei der erste Formteil (3a) einen ersten starren Formteilabschnitt (3aₛ) umfasst und der zweite Formteil (3b) einen zweiten starren Formteilabschnitt (3bₛ) umfasst, wobei das Verfahren ferner den Schritt umfasst: Herstellen eines minimalen Spaltabstands (D_{GM}) in der Pressrichtung (D_{P}) im vorgegebenen Pressabstand (D_{PD}) zwischen dem ersten starren Formteilabschnitt (3aₛ) und dem zweiten starren Formteilabschnitt (3bₛ).

6. Verfahren nach einem vorhergehenden Anspruch,
wobei das Verfahren ferner den Schritt umfasst: Herstellen eines Formhohlraums (4) zwischen dem ersten Formteil (3a) und dem zweiten Formteil (3b), wenn die Zelluloserohstruktur (2) in der Form (3) zwischen dem ersten Formteil (3a) und dem zweiten Formteil (3b) angeordnet ist.

7. Verfahren nach einem vorhergehenden Anspruch,
wobei der erste Formteil (3a) und/oder der zweite Formteil (3b) ein Verformungselement (5) umfassen, wobei das Verfahren ferner die Schritte umfasst: Komprimieren des Verformungselements (5) beim Formen des Zelluloseprodukts (1) durch Pressen der Zelluloserohstruktur (2), wenn diese zwischen dem ersten Formteil (3a) und dem zweiten Formteil (3b) angeordnet ist, im einzigen Pressvorgang (O_{SP}), wobei das Verformungselement (5) im einzigen Pressvorgang (O_{SP}) während der vorgegebenen Formdauer (T_{FPD}) auf eine komprimierte Maximalerstreckung (E_{c}) in Pressrichtung (D_{P}) aus einer anfänglichen Maximalerstreckung (E₁) in Pressrichtung (D_{P}) komprimiert wird.

8. Verfahren nach einem vorhergehenden Anspruch,
wobei der erste Formteil (3a) und/oder der zweite Formteil (3b) eine Heizeinheit (6) umfassen, wobei das Verfahren ferner die Schritte umfasst: Erhitzen des ersten Formteils (3a) und/oder des zweiten Formteils (3b) auf eine Formtemperatur der Form (T_{FM}) im Bereich von 100-200 °C, vorzugsweise im Bereich von 120-170 °C; und Erhitzen der Zelluloserohstruktur (2) auf die Formtemperatur (T_{F}) beim Formen des Zelluloseprodukts (1) im einzigen Pressvorgang (O_{SP}) während der vorgegebenen Formdauer (T_{FPD}) durch Wärmeübertragung vom ersten Formteil (3a) und/oder zweiten Formteil (3b).

## Revendications

1. Procédé de formage à sec d'un produit cellulosique (1) dans un système de moule de formage à sec (S) à partir d'une structure d'ébauche de cellulose formée par jet d'air (2),
dans lequel le système de moule de formage à sec (S) comprend un moule de formage (3) ayant une première partie de moule (3a) et une seconde partie de moule opposée (3b) agencées pour coopérer l'une avec l'autre dans une direction de pressage (D_{P}) lors du formage du produit cellulosique (1), dans lequel le procédé comprend les étapes consistant à :
fournir la structure d'ébauche de cellulose formée par jet d'air (2) et agencer la structure d'ébauche de cellulose (2) dans le moule de formage (3) entre la première partie de moule (3a) et la seconde partie de moule (3b), dans lequel la structure d'ébauche de cellulose (2) présente une teneur en humidité (C_{M}) dans la plage de 4 à 15 % en poids, de préférence dans la plage de 6 à 10 % en poids, lorsqu'elle est agencée entre la première partie de moule (3a) et la seconde partie de moule (3b) ;
former le produit cellulosique (1) en pressant et en chauffant la structure d'ébauche de cellulose (2) lorsqu'elle est agencée entre la première partie de moule (3a) et la seconde partie de moule (3b) en une opération de pressage unique (O_{SP}),
dans lequel, dans l'opération de pressage unique (O_{SP}), la structure d'ébauche de cellulose (2) est pressée avec une pression de formage (P_{F}) dans la plage de 1 à 100 MPa, de préférence dans la plage de 8 à 20 MPa, et chauffée à une température de formage (T_{F}) dans la plage de 100 à 200 °C, de préférence dans la plage de 120 à 170 °C,
dans lequel, dans l'opération de pressage unique (O_{SP}), la structure d'ébauche de cellulose (2) est pressée avec la pression de formage (P_{F}), et chauffée à la température de formage (T_{F}) pendant une durée de formage prédéterminée (T_{FPD}) dans la plage de 0,15 à 1 s.

2. Procédé selon la revendication 1,
dans lequel le procédé comprend en outre les étapes consistant à : libérer la première partie de moule (3a) et la seconde partie de moule (3b) l'une de l'autre après la durée de formage prédéterminée (T_{FPD}) ; et retirer le produit cellulosique formé (1) à partir du moule de formage (3) dans une durée de libération (T_{R}) à partir de l'amorçage de la libération de la première partie de moule (3a) et de la seconde partie de moule (3b) l'une de l'autre.

3. Procédé selon l'une quelconque des revendications précédentes,
dans lequel le procédé comprend en outre l'étape consistant à : appliquer une force de pressage maximale prédéterminée (F_{PM}) sur la première partie de moule (3a) et/ou la seconde partie de moule (3b) pendant la durée de formage prédéterminée (T_{FPD}), dans lequel la force de pressage maximale prédéterminée (F_{PM}) établit la pression de formage (P_{F}) sur la structure d'ébauche de cellulose (2) agencée dans le moule de formage (3) entre la première partie de moule (3a) et la seconde partie de moule (3b).

4. Procédé selon l'une quelconque des revendications 1 à 2, dans lequel le procédé comprend en outre l'étape consistant à : maintenir la première partie de moule (3a) et la seconde partie de moule (3b) dans une relation immobile pendant la durée de formage prédéterminée (T_{FPD}), dans lequel, dans la relation immobile, la première partie de moule (3a) et la seconde partie de moule (3b) sont agencées à une distance de pressage prédéterminée (D_{PD}) l'une de l'autre dans la direction de pressage (D_{P}), dans lequel la distance de pressage prédéterminée (D_{PD}) établit la pression de formage (P_{F}) sur la structure d'ébauche de cellulose (2) agencée dans le moule de formage (3) entre la première partie de moule (3a) et la seconde partie de moule (3b).

5. Procédé selon la revendication 4,
dans lequel la première partie de moule (3a) comprend une première section de partie de moule rigide (3aₛ) et la seconde partie de moule (3b) comprend une seconde section de partie de moule rigide (3bₛ), dans lequel le procédé comprend en outre l'étape consistant à : établir une distance d'espace minimale (D_{GM}) dans la direction de pressage (D_{P}) à la distance de pressage prédéterminée (D_{PD}) entre la première section de partie de moule rigide (3aₛ) et la seconde section de partie de moule rigide (3bₛ).

6. Procédé selon l'une quelconque des revendications précédentes,
dans lequel le procédé comprend en outre l'étape consistant à : établir une cavité de formage (4) entre la première partie de moule (3a) et la seconde partie de moule (3b) lorsque la structure d'ébauche de cellulose (2) est agencée dans le moule de formage (3) entre la première partie de moule (3a) et la seconde partie de moule (3b).

7. Procédé selon l'une quelconque des revendications précédentes,
dans lequel la première partie de moule (3a) et/ou la seconde partie de moule (3b) comprend un élément de déformation (5), dans lequel le procédé comprend en outre les étapes consistant à : comprimer l'élément de déformation (5) lors du formage du produit cellulosique (1) en pressant la structure d'ébauche de cellulose (2) lorsqu'elle est agencée entre la première partie de moule (3a) et la seconde partie de moule (3b) dans l'opération de pressage unique (O_{SP}), dans lequel, dans l'opération de pressage unique (O_{SP}) pendant la durée de formage prédéterminée (T_{FPD}), l'élément de déformation (5) est comprimé jusqu'à une extension maximale comprimée (E_{c}) dans la direction de pressage (D_{P}) à partir d'une extension maximale initiale (E₁) dans la direction de pressage (D_{P}).

8. Procédé selon l'une quelconque des revendications précédentes,
dans lequel la première partie de moule (3a) et/ou la seconde partie de moule (3b) comprend une unité de chauffage (6), dans lequel le procédé comprend en outre les étapes consistant à : chauffer la première partie de moule (3a) et/ou la seconde partie de moule (3b) à une température de moule de formage (T_{FM}) dans la plage de 100 à 200 °C, de préférence dans la plage de 120 à 170 °C ; et chauffer la structure d'ébauche de cellulose (2) à la température de formage (T_{F}) lors du formage du produit cellulosique (1) dans l'opération de pressage unique (O_{SP}) pendant la durée de formage prédéterminée (T_{FPD}) par transfert de chaleur provenant de la première partie de moule (3a) et/ou de la seconde partie de moule (3b).
